# EUROPEAN PATENT SPECIFICATION

(11) **EP 4 639 181 B1**
(45) Date of publication and mention of the grant of the patent: **18.11.2026**
(21) Application number: 23825601.0
(22) Date of filing: 15.12.2023
(51) Int. Cl.: G01P 3/66, G01P 3/64, B65G 43/02

(54) **SYSTEM AND METHOD FOR MEASURING A CONVEYOR BELT**
SYSTEM UND VERFAHREN ZUR MESSUNG EINES FÖRDERBANDS
SYSTÈME ET PROCÉDÉ DE MESURE D'UNE BANDE TRANSPORTEUSE

(30) Priority: 20.12.2022 US 202218069221
(43) Date of publication of application: 29.10.2025
(73) Proprietor: HABASIT ITALIANA SPA, 20090 Cesano Boscone (MI) (IT)
(72) Inventor: WAGNER, Klaus, 4153 Reinach (CH)
(74) Representative: Bohest AG
(86) International application number: PCT/CH2023/050043
(87) International publication number: WO 2024/130452

(56) References cited:
- JP-A- 2018 047 973
- US-A1- 2006 219 528
- US-A1- 2015 008 097
- US-A1- 2017 225 200
- US-A1- 2021 032 043

## Description

### Field of the Invention

The present invention relates to conveyor belts, and more particularly to measuring one or more characteristics of a conveyor belt.

### Background of the Invention

Conveyor belts of various configurations are used in an immense number of facilities throughout the world. Many conveyor belts, for example, spiral conveyor belts, have long belt lengths which often exceed 100 meters or more. Furthermore, conveyors may run twenty-four hours a day, seven days a week. As such, conveyor belts are subject to stretching, high wear, and other conditions, which must be addressed to avoid unplanned downtime. There is a long-felt need for techniques to provide data to determine belt condition, such as, for example, elongation, wear, etc. In this way, preventive maintenance programs can be tailored so as to minimize planned downtime, while avoiding any unplanned downtime. Different systems and methods for measuring a conveyor belt are described in US 2006/219528 A1, US 2021/032043 A1, JP 2018 047973 A and US 2017/225200 A1. US 2015/008097 A1 discloses the closest prior art system and method for measuring a conveyor belt, comprising a first Hall sensor and a second Hall sensor configured to be fixed at two locations along a path of the conveyor belt; a magnet configured to be affixed to a location of the conveyor belt such that the magnet is detectable by the first and the second Hall sensors when the magnet is in range of the first and second Hall sensors, wherein the first Hall sensor is configured to provide a first signal as the magnet approaches the first Hall sensor and the second Hall sensor is configured to provide a second signal as the magnet approaches the second Hall sensor; and a processor in electronic communication with the first and second Hall sensors, the processor being configured to calculate a belt speed based on an elapsed time between the first signal and the second signal.

### Brief Summary of the Invention

The present invention meets the above-described need by providing a system and a method for measuring a conveyor belt according to independent claims 1 and 16. Preferred embodiments will emerge from the dependent claims.

In a first aspect, the present invention may be embodied as system for measuring a conveyor belt. This system includes a first detector configured to be fixed at a location along a path of a conveyor belt. The first detector may be a magnetic sensor, such as, for example, a hall-effect sensor. A first signal generator is configured to be affixed to (at) a first location of the conveyor belt such that the first signal generator is detectable by the first detector when the first signal generator is in range of the first detector. The first signal generator may be, for example, a magnet. The first detector is configured to provide a first signal as the first signal generator approaches the first detector. The first detector is configured to provide a second signal as the first signal generator moves away from the first detector. A processor is in electronic communication with the first detector and configured to calculate a belt speed based on an elapsed time between the first signal and the second signal. The processor may be further configured to calculate a belt length based on the calculated belt speed and time elapsed between two or more first signals and/or two or more second signals. The processor may be further configured to calculate a belt elongation based on the calculated belt length and a stored belt length value.

In some embodiments, the system includes a second detector at a fixed location along a path of the conveyor belt and located downstream from a belt drive in the direction of belt travel. The second detector may be configured to provide a signal as a signal generator (*e.g.,* the first signal generator, etc.) approaches the second detector. The second detector may be configured to provide another signal as a generator (*e.g.,* the first signal generator, etc.) moves away from the second detector. The processor may be configured to differentiate between belt elongation resulting from wear and belt elongation resulting from load. Such determination may be based in part on one or more signals provided by the second detector.

In some embodiments, the system includes one or more additional downstream detectors at a corresponding one or more fixed locations along a path of the conveyor belt downstream from the belt drive in the direction of belt travel. The one or more additional downstream detectors may be configured to provide signal(s) as a signal generator (*e.g.,* the first signal generator, etc.) approaches the one or more additional downstream detectors. The one or more additional downstream detectors may be configured to provide other signal(s) as a generator (*e.g.,* the first signal generator, etc.) moves away from the one or more additional downstream detectors. The processor may be configured to differentiate between belt elongation resulting from material loading on the belt and belt elongation resulting from friction. Such determination may be based in part on one or more signals provided by the one or more additional downstream detectors.

In some embodiments, the system includes a pole piece adjacent to the first detector and configured to direct a magnetic field of the first signal generator towards the first detector. In some embodiments, the system includes a distance sensor proximal to the first detector and configured to detect a distance to the conveyor belt. The processor may be configured to utilize a distance to the conveyor belt in calculating the belt speed (*e.g.,* in evaluating the time elapsed between the first signal and the second signal, etc.) In some embodiments, the distance sensor is an ultrasonic sensor. In some embodiments, the distance sensor includes a magnetic sensor and a magnet. For example, the magnet may be affixed to the conveyor belt at a location proximal to the first signal generator, and the magnetic sensor is configured to provide a distance signal as the magnet passes the magnetic sensor.

In some embodiments, the system includes a second signal generator. The first detector may be configured to provide a third signal as the second signal generator approaches the first detector. The first detector may be configured to provide a fourth signal as the second signal generator moves away from the first detector. The processor may be configured to calculate a belt speed based on an elapsed time between the third signal and the fourth signal. The processor may be configured to calculate a belt segment length between the first signal generator and the second signal generator (*e.g.,* based on at least one of the first signal and the second signal, and at least one of the third signal and the fourth signal). The processor may be configured to calculate a belt elongation based on the calculated belt segment length and a stored belt segment length value.

In another aspect, the present invention may be embodied as a method for measuring a conveyor belt. The method includes receiving, at a processor, a first signal generated when a first signal generator affixed to the conveyor belt comes within range of a first detector at a fixed location along a path of the belt. The method includes receiving, at the processor, a second signal generated when the first signal generator moves out of range of the first detector. A belt speed is calculated, using the processor, based on an elapsed time between the first signal and the second signal. The method may include calculating a belt length based on the calculated belt speed and time elapsed between two or more first signals and/or two or more second signals. The method may include calculating a belt elongation based on the calculated belt length and a stored belt length value.

In some embodiments, the method includes differentiating between a belt elongation resulting from wear and belt elongation resulting from load based on belt elongation calculated at the first detector and belt elongation calculated at a second detector, wherein the second detector is located at a fixed position along the path of the belt and downstream from a belt drive in a direction of belt travel. In some embodiments, the method includes differentiating between a belt elongation resulting from material loading and belt elongation resulting from friction based on belt elongation calculated at the second detector and belt elongation calculated at one or more additional downstream detectors, wherein the one or more additional downstream detectors are located at a corresponding one or more fixed locations along the path of the belt and downstream of the belt drive.

### Description of the Drawings

For a fuller understanding of the nature and objects of the invention, reference should be made to the following detailed description taken in conjunction with the accompanying drawings.
Figure 1 is a diagram of a system according to an embodiment of the present invention.
Figure 2 is a diagram of a system according to another embodiment of the present invention.
Figure 3 is a diagram of a portion of a system according to another embodiment of the present invention.
Figure 4 is a chart showing a method according to another embodiment of the present invention.

### Detailed Description of the Invention

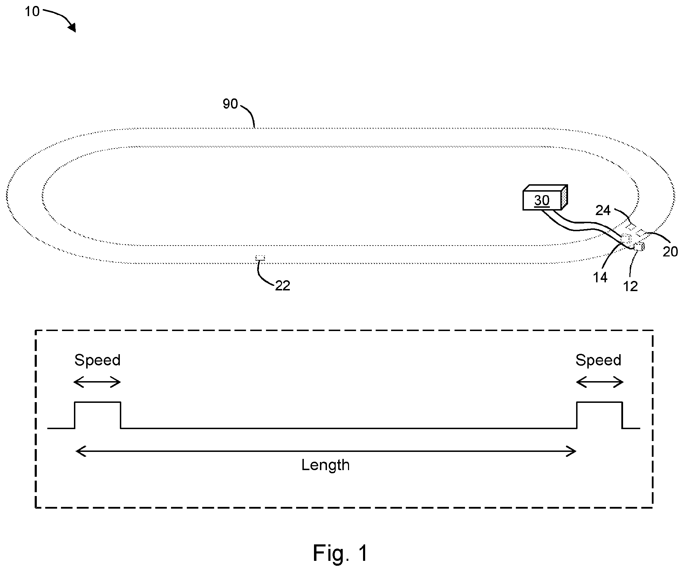

With reference to Figure 1, the present invention may be embodied as a system **10** for measuring a conveyor belt **90.** The system may be used to measure various parameters of the belt such as, for example, a speed of the conveyor belt, a length of the conveyor belt (or a segment of the conveyor belt), and/or an elongation of the conveyor belt (or a segment of the conveyor belt). The system may be used with a modular belt, a flat belt, a hybrid belt, a chain, a spiral conveyor, or any other type of belt or conveyor system.

The system **10** includes a first detector **12** located at a fixed location along a path of the conveyor belt **90.** A first signal generator **20** is configured to be affixed to a first location of the conveyor belt. In this way, the first signal generator **20** is detectable by the first detector **12** when the first signal generator is in range of the first detector. In an illustrative example, the first signal generator may be a magnet, such as, for example, a permanent magnet, and the first detector may be a magnetic sensor, such as, for example, a hall effect sensor. As the conveyor moves through its path, the first signal generator will approach the first detector, come within a detecting range of the first detector, and move away from the first detector. Other examples of systems of signal generators and corresponding detectors include optical systems, ultrasonic systems, and the like.

The first detector **12** is configured to provide a first signal as the first signal generator **20** approaches the first detector, and a second signal as the first signal generator **20** moves away from the first detector **12.** For example, the first signal may be a rising edge of a digital signal (*e.g.,* a logic '0' value moving to a logic '1' value), and the second signal may be a falling edge of the digital signal (*e.g.,* a logic '1' changing to a logic '0').

The system **10** includes a processor **30** in electronic communication with the first detector **12.** The processor **30** is configured to calculate a belt speed based on an elapsed time between the first signal and the second signal. For example, using *a priori* knowledge of the distance between a position of the first signal generator when a first signal is provided by the first detector and a position of the first signal generator when a second signal is provided by the first detector, and the time elapsed for the first signal generator to travel this distance *(i.e.,* the time elapsed between the first signal and the second signal received from the first detector), the processor is configured to determine the speed of the belt (in a simple example, $\frac{distance}{time}$). In some embodiments, the processor may account for factors such as the radius of a curve in systems where the first detector is located on the curve, the radius of a spiral belt system, the transverse (with respect to a direction of belt travel) location of the first signal generator on the belt, etc.

Having determined the speed of the conveyor belt, in some embodiments, the processor **30** is further configured to calculate a length of the belt. For example, using the time elapsed between subsequent first signals received by the processor, and the calculated belt speed, a length of the belt may be calculated. In some embodiments, multiple passes of the conveyor may be used. For example, two passes of the belt may be used, and divided by two, so as to average the elapsed time per lap of the belt. For example: $Belt Length = Belt Speed \times Average Elapsed Time$ (1)

In some embodiments, the processor **30** is further configured to calculate a belt elongation. For example, using the calculated belt length and a stored previous value of the belt length, the elongation may be calculated. In some embodiments, the previous belt length may be subtracted from the calculated belt length to determine a belt elongation. In some embodiments, the belt length values may be divided to provide a ration (and/or percentage) elongation. The stored previous value of belt length may be an initial belt length (*e.g*., measured when the belt was new) or a subsequent belt length. For example, belt elongation may be tracked periodically (*e.g.*, daily, weekly, monthly, etc.) so as to monitor elongation trends.

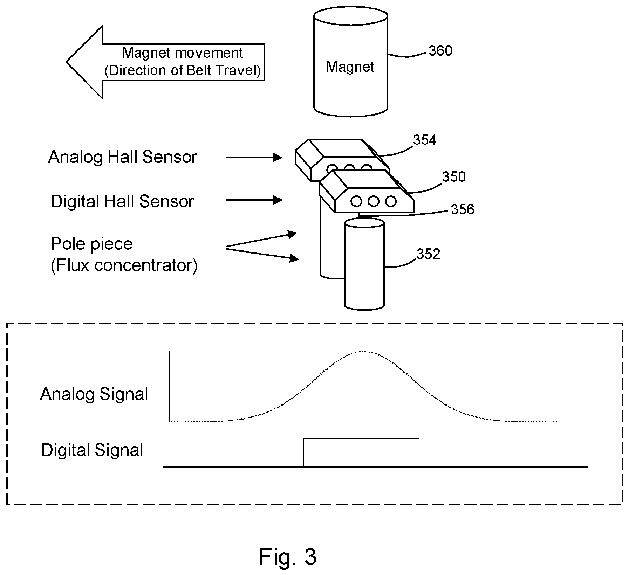

The time elapsed between the first signal and the second signal and/or the distance traveled by the first signal generator during the elapsed time may vary depending on the distance between the first detector **12** and the first signal generator **20.** In some embodiments, a distance sensor may be proximal to the first detector. The distance sensor may be, for example, a magnet **24** and magnetic sensor **14.** The magnet **24** may be configured to be affixed to the conveyor belt **90** at a location proximal to the first signal generator **20.** The magnetic sensor may be configured to provide a distance signal to the processor as the magnet passes the magnetic sensor *(i.e.,* passes within a detecting range of the magnetic sensor). In another example, the distance sensor is an ultrasonic sensor. The distance sensor is configured to detect a distance to the conveyor belt. The processor may be further configured such that the calculation of belt speed takes into account a distance between the distance sensor (and thus, the first detector) and the conveyor belt. With reference to Figure 3, in an example system, an analog hall sensor **354** is used to measure a magnetic field of a magnet **360** in order to measure a distance from the sensor to the magnet. For example, the distance may be represented by the maximum value measured by the hall sensor, the area under the curve of values measured, or other characteristics of the measured magnetic field. In some embodiments, the distance is a relative distance (*e.g.*, relative to the distance(s) measured on previous cycle(s) of the conveyor). In this way, the belt speed calculation may compensate for the distance to the belt. Figure 3 shows an embodiment where magnet **360** used for sensing distance is the same magnet as the first signal generator (*i.e.,* detected by the first detector (digital hall sensor **350)).** In some embodiments, the first detector may be used to detect the first signal generator and also to measure a distance to the belt.

In some embodiments, the system **10** includes a second signal generator **22.** The second signal generator **22** may be configured to be affixed to a second location of the conveyor belt, which is longitudinally spaced apart from the first location (in the direction of belt travel). In this way, the second signal generator **22** is detectable by the first detector **12** when the second signal generator is in range of the first detector. In an illustrative example, the second signal generator may be a magnet. As the conveyor moves through its path, the second signal generator will approach the first detector, come within a detecting range of the first detector, and move away from the first detector. The first detector may be configured to provide a third signal as the second signal generator approaches the first detector and a fourth signal as the second signal generator moves away from the first detector. For example, the third signal may be a rising edge of a digital signal (*e.g.,* a logic '0' value moving to a logic '1' value), and the fourth signal may be a falling edge of the digital signal (*e.g.,* a logic '1' changing to a logic '0').

The processor **30** may further be configured to calculate a belt speed based on an elapsed time between the third signal and the fourth signal. For example, using *a priori* knowledge of the distance between a position of the second signal generator when a third signal is provided by the first detector and a position of the second signal generator when a fourth signal is provided by the first detector, and the time elapsed for the second signal generator to travel this distance (*i.e.,* the time elapsed between the third signal and the fourth signal received from the first detector), the processor is configured to determine the speed of the belt (in a simple example, $\frac{distance}{time}$).

In some embodiments, the processor may account for factors such as temperature (*e.g.*, ambient temperature, etc.), humidity, the radius of a curve in systems where the detector is located on the curve, the radius of a spiral belt system, the transverse (with respect to a direction of belt travel) location of the second signal generator on the belt, etc. For example, the ambient temperature can have a large effect on the length of a belt (according to a coefficient of thermal expansion of the material(s) used to make the belt). As such, the processor may be configured to compensate for elongation based on temperature using, for example, a look-up-table, a thermal expansion parameter, or other technique. Similarly, certain materials - such as, for example, polyamide - are known to expand (*i.e.,* elongate) as a result of an increase in the ambient humidity. For this reason, the processor may be configured to compensate for elongation resulting from a change in the ambient humidity.

In some embodiments, the processor **30** is further configured to calculate a length of a segment of the belt. For example, using the time elapsed between the first signal and the third signal received by the processor, and the calculated belt speed, a length of the belt segment between the first signal generator and second signal generator may be calculated. In various embodiments, combinations of first signal and/or second signal and third signal and/or fourth signal may be used to calculate a belt segment length. In some embodiments, the processor may be further configured to calculate a belt elongation based on the calculated belt segment length and a stored previous belt segment length.

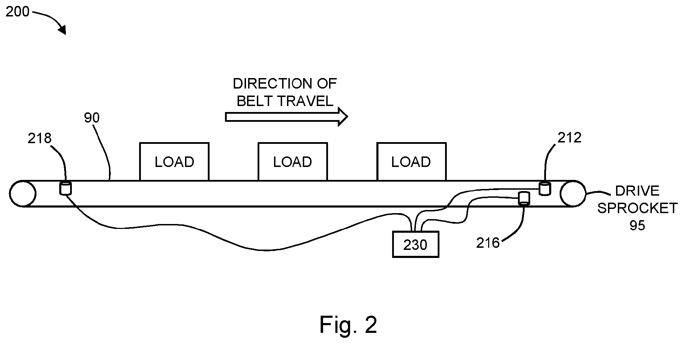

In some embodiments, such as system **200** depicted in Figure 2, a second detector **216** is provided in addition to the first detector **212.** The system also includes a first signal generator and may include a second signal generator. The second detector **216** is located at a location along the length of the belt where belt tension is minimal. For example, the second detector **216** in Figure 2 is positioned just beyond a belt drive **95** (downstream from the belt drive in the direction of belt travel). In this way, the processor **230** may be configured to differentiate between belt elongation resulting from high load and belt elongation resulting from belt wear. For example, where the elongation measured at the first detector **212** is greater than the elongation as measured at the second detector **216,** then the belt is determined to be elongated due to high load on the belt. On the other hand, if the elongation as measured at each of the first detector and second detector is determined to increase at a generally equal rate, then the belt is determined to be elongated due to high wear.

In some embodiments, the system **200** may have one or more additional downstream detectors **218** located beyond the belt drive **95.** Where belt **90** elongation results from high load on the belt (*i.e.,* not by belt wear), one or more of the first detector **212,** the second detector **216,** and the one or more additional downstream detectors **218** may allow for the processor **230** to differentiate an elongation due to an increased loading of material on the belt (*i*.*e*., weight that is carried by the belt) versus an elongation due to higher friction of the belt system itself. For example, while changes in elongation due to higher friction occur slowly, sudden changes in elongation are more likely due to increased material loading on the belt. In another example, where elongation results from increased friction in the belt system (*e.g.*, accumulation of dirt or other material on the conveyor components), there will be an increasing difference in the elongation measured at the first detector **212,** the second detector **216,** and (when present) the additional downstream detector **218.** The elongation measured on the additional downstream detector **218** will fluctuate the most. In embodiments where the additional downstream detector **218** is located at the beginning of the load side of the conveyor (such as depicted in Figure 2), the measurement will be strongly impacted by load. If the conveyor is empty (no material loaded on the belt), the elongation measured at the additional downstream detector **218** will be nearly the same as measured at second detector **216.** Once a load is added to the conveyor both detectors **218** and **212** will measure a elongation (although each detector will show a different value since the belt stretch is largest where the belt force is highest-*i.e.,* at the drive of the belt). Over a longer period of time, the difference in elongation measured at detectors **218** and **212** may increase. Assuming that the running conditions remain the same (same load) over this time, the additional elongation will be caused by increased friction on the load side. Based on a predefined threshold, a signal can be generated-*e.g.*, a request for cleaning can be sent to the maintenance department.

In embodiments where a detector (*e.g.,* the first detector, the second detector, and/or the one or more additional downstream detectors) is a magnetic sensor such as a hall-effect sensor, such detector may further include a pole piece to direct a magnetic field from the first signal generator (and second signal generator if present). For example, the embodiment shown in Figure 3 includes a pole piece **352** backing the hall-effect sensor **350** so as to direct the magnetic field of magnet **360.** Figure 3 also shows a second pole piece **356** backing analog hall sensor **354.**

The present invention provides a system for measuring a speed, length, and/or elongation of a conveyor belt. A first detector is located near a conveyor belt (*e.g.,* near an edge of the belt, underneath the belt, etc.) at a fixed position along a path of the conveyor belt. A first signal generator is disposed on the conveyor belt such that the first signal generator is detectable by the detector when the first signal generator comes close to the first detector (*i.e.,* as the belt advances). A second signal generator is disposed on the conveyor belt and spaced apart from the first signal generator. Similar to the first signal generator, the second signal generator is detectable by the first detector when it is near the first detector.

When a signal generator (one of the first or second signal generators) is next to the first detector, the first detector provides a signal. As the signal generator approaches the first detector, the resulting signal from the first detector will have a rising edge. As the signal generator moves beyond the first detector, the resulting signal from the first detector will have a falling edge. A speed of the conveyor belt is determined based on the timing between the rising edge and the falling edge and the known length of the signal. The speed may be determined based on one or both of the first signal generator and the second signal generator.

Length and elongation may also be measured using the time between the first signal generator and the second signal generator. In some embodiments, these values may be extrapolated to characterize the full conveyor belt.

Any of the measurements may be averaged as desired. For example, the speed of the belt may be determined as the average of the speed determined using the first signal generator and the speed determined with the second signal generator. In another example, the length may be determined by averaging the time between multiple passes of the first and/or second signal generator. Similarly, belt speed, length, and/or elongation may be alternatively or additionally measured at the second detector and/or the one or more additional downstream detectors.

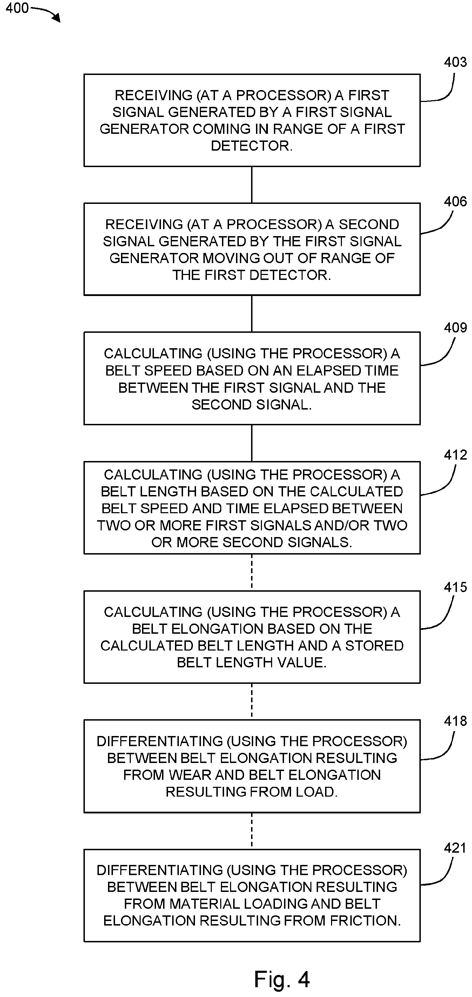

With reference to Figure 4, in another aspect, the present invention may be embodied as a method **400** for measuring a conveyor belt. The method **400** includes receiving **403,** at a processor, a first signal generated when a first signal generator affixed to the conveyor belt comes within range of a first detector at a fixed location along a path of the belt. The processor receives **406** a second signal generated when the first signal generator moves out of range of the first detector. The method **400** includes calculating **409,** using the processor, a belt speed based on an elapsed time between the first signal and the second signal. **In** some embodiments, the method further includes calculating **412** a belt length based on the calculated **409** belt speed and time elapsed between two or more first signals and/or two or more second signals. **In** some embodiments, the method further includes calculating **415** a belt elongation based on the calculated belt length and a stored belt length value.

In some embodiments, the method includes differentiating **418** between a belt elongation resulting from wear and belt elongation resulting from load, wherein the differentiating **418** is based on belt elongation calculated using signals generated at the first detector and belt elongation calculated using signals generated at a second detector. For example: $Δ l = \frac{F ∗ l}{bo ∗ h ∗ E} ,$ (1) where Δ*l* is the measured elongation, *F* is the force within the belt, *l* is the length between two sensors (or if only one sensor, the length of the load-carrying section of the conveyor), *bo* is the belt width, *h* is the belt thickness, and *E* is the measured, non-linear elastic modulus of a belt. Therefore, the force in the belt is given with measured elongation (which may be corrected to account for changes due to wear, temperature, and/or humidity) multiplied by belt width, belt thickness, and elastic modulus, all divided by the length between the sensors (or length between start of load-carrying portion of the conveyor and the detector position). The second detector is located at a fixed position along the path of the belt and downstream from a belt drive in a direction of belt travel. In some embodiments, the method includes differentiating **421** between a belt elongation resulting from material loading and belt elongation resulting from friction, wherein the differentiating **421** is based on belt elongation calculated using signals generated at the second detector and belt elongation calculated using signals generated at one or more additional downstream detectors. The one or more additional downstream detectors are located at a corresponding one or more fixed locations along the path of the belt and downstream of the belt drive.

Although the present invention has been described with respect to one or more particular embodiments, it will be understood that other embodiments of the present invention may be made without departing from the scope of the present invention.

## Claims

1. System (10; 200) for measuring a conveyor belt (90), comprising:
a first detector (12; 212; 350) configured to be fixed at a location along a path of the conveyor belt (90);
a first signal generator (20; 360) configured to be affixed to a first location of the conveyor belt (90) such that the first signal generator (20; 360) is detectable by the first detector (12; 212; 350) when the first signal generator (20; 360) is in range of the first detector (12; 212; 350);
wherein the first detector (12; 212; 350) is configured to provide a first signal as the first signal generator (20; 360) approaches the first detector (12; 212; 350); and
a processor (30; 230) in electronic communication with the first detector (12; 212),
**characterized in that** the first detector (12; 212; 350) is configured to provide a second signal as the first signal generator (20; 360) moves away from the first detector (12; 212; 350) and the processor (30; 230) is configured to calculate a belt speed based on an elapsed time between the first signal and the second signal and the distance between a position of the first signal generator (20; 360) when the first signal is provided and a position of the first signal generator (20; 360) when the second signal is provided.

2. System (10; 200) according to claim 1, wherein the processor (30; 230) is further configured to calculate a belt length based on the calculated belt speed and time elapsed between two or more first signals and/or two or more second signals.

3. System (10; 200) according to claim 2, wherein the processor (30; 230) is further configured to calculate a belt elongation based on the calculated belt length and a stored belt length value.

4. System (10; 200) according to claim 3, further comprising a second detector (216) configured to be fixed at a fixed location along a path of the conveyor belt (90) and to be located downstream from a belt drive (95) in the direction of belt travel, wherein the processor (30; 230) is further configured to differentiate between belt elongation resulting from wear and belt elongation resulting from load based on belt elongation calculated at the first detector and belt elongation calculated at the second detector.

5. System (10; 200) according to claim 4, further comprising one or more additional downstream detectors (218) configured to be fixed at a corresponding one or more fixed locations along a path of the conveyor belt (90) downstream from the belt drive (95) in the direction of belt travel, wherein the processor (30; 230) is further configured to differentiate between belt elongation resulting from material loading on the belt (90) and belt elongation resulting from friction based on belt elongation calculated at the second detector and belt elongation calculated at the one or more additional downstream detectors.

6. System (10; 200) according to any one of claims 1 to 5, wherein the first signal generator (20; 360) is a magnet.

7. System (10; 200) according to claim 6, wherein the first detector (12; 212; 350) is a hall effect sensor.

8. System (10; 200) according to claim 6 or 7, further comprising a pole piece (352) adjacent to the first detector (12; 212; 350) and configured to direct a magnetic field of the first signal generator (20; 360) towards the first detector (12; 212; 350).

9. System (10; 200) according to any one of claims 1 to 8, wherein the system further comprises a distance sensor (14, 24; 354, 360) proximal to the first detector (12; 212; 350) and configured to detect a distance to the conveyor belt (90), and wherein the processor (30; 230) is further configured to utilize the distance to the conveyor belt (90) in calculating the belt speed.

10. System (10; 200) according to claim 9, wherein the distance sensor is an ultrasonic sensor.

11. System (10; 200) according to claim 9, wherein the distance sensor comprises a magnetic sensor (14; 354) and a magnet (24; 360), the magnet (24; 360) being configured to be affixed to the conveyor belt (90) at a location proximal to the first signal generator (20; 360), and wherein the magnetic sensor (14; 354) is configured to provide the distance signal as the magnet (24; 360) passes the magnetic sensor (14; 354).

12. System (10; 200) according to any one of claims 1 to 11, further comprising a second signal generator (22), wherein the first detector (12; 212; 350) is configured to provide a third signal as the second signal generator (22) approaches the first detector (12; 212; 350) and a fourth signal as the second signal generator (22) moves away from the first detector (12; 212; 350).

13. System (10; 200) according to claim 12, wherein the processor (30; 230) is further configured to calculate a belt speed based on an elapsed time between the third signal and the fourth signal.

14. System (10; 200) according to claim 12 or 13, wherein the processor (30; 230) is further configured to calculate a belt segment length between the first signal generator (20; 360) and the second signal generator (22) based on at least one of the first signal and the second signal, and at least one of the third signal and the fourth signal.

15. System (10; 200) according to claim 14, wherein the processor (30; 230) is further configured to calculate a belt elongation based on the calculated belt segment length and a stored belt segment length value.

16. Method (400) for measuring a conveyor belt (90), comprising:
receiving, at a processor (30; 230), a first signal generated when a first signal generator (20; 360) affixed to the conveyor belt (90) comes within range of a first detector (12; 212; 350) at a fixed location along a path of the belt (90);
**characterized in that** it further comprises:
receiving, at the processor (30; 230), a second signal generated when the first signal generator (20; 360) moves out of range of the first detector (12; 212; 350); and
calculating, using the processor (30; 230), a belt speed based on an elapsed time between the first signal and the second signal and the distance between a position of the first signal generator (20; 360) when the first signal is provided and a position of the first signal generator (20; 360) when the second signal is provided.

17. Method (400) according to claim 16, further comprising calculating a belt length based on the calculated belt speed and time elapsed between two or more first signals and/or two or more second signals.

18. Method (400) according to claim 17, further comprising calculating a belt elongation based on the calculated belt length and a stored belt length value.

19. Method (400) according to claim 18, further comprising differentiating between a belt elongation resulting from wear and belt elongation resulting from load based on belt elongation calculated at the first detector (12; 212; 350) and belt elongation calculated at a second detector (216), wherein the second detector (216) is located at a fixed position along the path of the belt (90) and downstream from a belt drive (95) in a direction of belt travel.

20. Method (400) according to claim 19, further comprising differentiating between a belt elongation resulting from material loading and belt elongation resulting from friction based on belt elongation calculated at the second detector (216) and belt elongation calculated at one or more additional downstream detectors (218), wherein the one or more additional downstream detectors (218) are located at a corresponding one or more fixed locations along the path of the belt (90) and downstream of the belt drive (95).

## Patentansprüche

1. System (10; 200) zur Messung eines Förderbands (90), umfassend:
einen ersten Detektor (12; 212; 350), der konfiguriert ist, um an einer Stelle entlang eines Wegs des Förderbands (90) befestigt zu werden;
einen ersten Signalgenerator (20; 360), der konfiguriert ist, um an einer ersten Stelle des Förderbands (90) angebracht zu werden, so dass der erste Signalgenerator (20; 360) vom ersten Detektor (12; 212; 350) erfassbar ist, wenn sich der erste Signalgenerator (20; 360) in Reichweite des ersten Detektors (12; 212; 350) befindet;
wobei der erste Detektor (12; 212; 350) konfiguriert ist, um ein erstes Signal zu liefern, wenn sich der erste Signalgenerator (20; 360) dem ersten Detektor (12; 212; 350) nähert; und
einen Prozessor (30; 230), der in elektronischer Verbindung mit dem ersten Detektor (12; 212) steht,
**dadurch gekennzeichnet, dass** der erste Detektor (12; 212; 350) konfiguriert ist, um ein zweites Signal zu liefern, wenn sich der erste Signalgenerator (20; 360) vom ersten Detektor (12; 212; 350) entfernt, und der Prozessor (30; 230) konfiguriert ist, um eine Bandgeschwindigkeit auf der Grundlage einer verstrichenen Zeit zwischen dem ersten Signal und dem zweiten Signal sowie der Entfernung zwischen einer Position des ersten Signalgenerators (20; 360) zum Zeitpunkt der Lieferung des ersten Signals und einer Position des ersten Signalgenerators (20; 360) zum Zeitpunkt der Lieferung des zweiten Signals zu berechnen.

2. System (10; 200) nach Anspruch 1, wobei der Prozessor (30; 230) ferner konfiguriert ist, um eine Bandlänge auf der Grundlage der berechneten Bandgeschwindigkeit und der zwischen zwei oder mehr ersten Signalen und/oder zwei oder mehr zweiten Signalen verstrichenen Zeit zu berechnen.

3. System (10; 200) nach Anspruch 2, wobei der Prozessor (30; 230) ferner konfiguriert ist, um eine Bandverlängerung auf der Grundlage der berechneten Bandlänge und eines gespeicherten Bandlängenwerts zu berechnen.

4. System (10; 200) nach Anspruch 3, das ferner einen zweiten Detektor (216) umfasst, der konfiguriert ist, um an einer festen Stelle entlang eines Wegs des Förderbands (90) befestigt zu werden und sich in Laufrichtung des Bands nachgelagert zu einem Bandantrieb (95) zu befinden, wobei der Prozessor (30; 230) ferner konfiguriert ist, um zwischen einer durch Verschleiss bedingten Bandverlängerung und einer durch Belastung bedingten Bandverlängerung auf der Grundlage der beim ersten Detektor berechneten Bandverlängerung und der beim zweiten Detektor berechneten Bandverlängerung zu unterscheiden.

5. System (10; 200) nach Anspruch 4, das ferner einen oder mehrere zusätzliche nachgelagerte Detektoren (218) umfasst, die konfiguriert sind, um an einer entsprechenden oder mehreren festen Stellen entlang eines Wegs des Förderbands (90) in Laufrichtung des Bands nachgelagert zu einem Bandantrieb (95) befestigt zu werden, wobei der Prozessor (30; 230) ferner konfiguriert ist, um zwischen einer durch Materialbelastung auf dem Band (90) bedingten Bandverlängerung und einer durch Reibung bedingten Bandverlängerung auf der Grundlage der beim zweiten Detektor berechneten Bandverlängerung und der bei dem einen oder den mehreren zusätzlichen nachgelagerten Detektoren berechneten Bandverlängerung zu unterscheiden.

6. System (10; 200) nach einem der Ansprüche 1 bis 5, wobei der erste Signalgenerator (20; 360) ein Magnet ist.

7. System (10; 200) nach Anspruch 6, wobei der erste Detektor (12; 212; 350) ein Hall-Effekt-Sensor ist.

8. System (10; 200) nach Anspruch 6 oder 7, das ferner ein Polstück (352) umfasst, das an den ersten Detektor (12; 212; 350) angrenzt und konfiguriert ist, um ein Magnetfeld des ersten Signalgenerators (20; 360) auf den ersten Detektor (12; 212; 350) zu richten.

9. System (10; 200) nach einem der Ansprüche 1 bis 8, wobei das System ferner einen Abstandssensor (14, 24; 354, 360) in der Nähe des ersten Detektors (12; 212; 350) umfasst, der konfiguriert ist, um einen Abstand zum Förderband (90) zu erfassen, und wobei der Prozessor (30; 230) ferner konfiguriert ist, um den Abstand zum Förderband (90) bei der Berechnung der Bandgeschwindigkeit zu verwenden.

10. System (10; 200) nach Anspruch 9, wobei der Abstandssensor ein Ultraschallsensor ist.

11. System (10; 200) nach Anspruch 9, wobei der Abstandssensor einen Magnetsensor (14; 354) und einen Magneten (24; 360) umfasst, wobei der Magnet (24; 360) konfiguriert ist, um an einer Stelle nahe dem ersten Signalgenerator (20; 360) am Förderband (90) befestigt zu werden, und wobei der Magnetsensor (14; 354) konfiguriert ist, um das Abstandssignal zu liefern, wenn der Magnet (24; 360) den Magnetsensor (14; 354) passiert.

12. System (10; 200) nach einem der Ansprüche 1 bis 11, das ferner einen zweiten Signalgenerator (22) umfasst, wobei der erste Detektor (12; 212; 350) konfiguriert ist, um ein drittes Signal zu liefern, wenn sich der zweite Signalgenerator (22) dem ersten Detektor (12; 212; 350) nähert, und ein viertes Signal zu liefern, wenn sich der zweite Signalgenerator (22) vom ersten Detektor (12; 212; 350) entfernt.

13. System (10; 200) nach Anspruch 12, wobei der Prozessor (30; 230) ferner konfiguriert ist, um eine Bandgeschwindigkeit auf der Grundlage einer verstrichenen Zeit zwischen dem dritten Signal und dem vierten Signal zu berechnen.

14. System (10; 200) nach Anspruch 12 oder 13, wobei der Prozessor (30; 230) ferner konfiguriert ist, um eine Bandsegmentlänge zwischen dem ersten Signalgenerator (20; 360) und dem zweiten Signalgenerator (22) auf der Grundlage mindestens eines der ersten und zweiten Signale sowie mindestens eines der dritten und vierten Signale zu berechnen.

15. System (10; 200) nach Anspruch 14, wobei der Prozessor (30; 230) ferner konfiguriert ist, eine Bandverlängerung auf der Grundlage der berechneten Bandsegmentlänge und eines gespeicherten Bandsegmentlängenwerts zu berechnen.

16. Verfahren (400) zum Messen eines Förderbands (90), umfassend:
Empfangen eines ersten Signals an einem Prozessor (30; 230), das erzeugt wird, wenn ein am Förderband (90) befestigter erster Signalgenerator (20; 360) in den Erfassungsbereich eines ersten Detektors (12; 212; 350) an einer festen Stelle entlang eines Wegs des Förderbands (90) gelangt;
**dadurch gekennzeichnet, dass** es ferner umfasst:
Empfangen eines zweiten Signals am Prozessor (30; 230), das erzeugt wird, wenn sich der erste Signalgenerator (20; 360) aus dem Erfassungsbereich des ersten Detektors (12; 212; 350) entfernt; und
Berechnen einer Bandgeschwindigkeit unter Verwendung des Prozessors (30; 230) auf der Grundlage einer verstrichenen Zeit zwischen dem ersten Signal und dem zweiten Signal sowie dem Abstand zwischen einer Position des ersten Signalgenerators (20; 360) zum Zeitpunkt der Erzeugung des ersten Signals und einer Position des ersten Signalgenerators (20; 360) zum Zeitpunkt der Erzeugung des zweiten Signals.

17. Verfahren (400) nach Anspruch 16, das ferner das Berechnen einer Bandlänge auf der Grundlage der berechneten Bandgeschwindigkeit und der zwischen zwei oder mehr ersten Signalen und/oder zwei oder mehr zweiten Signalen verstrichenen Zeit umfasst.

18. Verfahren (400) nach Anspruch 17, das ferner die Berechnung einer Bandverlängerung auf der Grundlage der berechneten Bandlänge und eines gespeicherten Bandlängenwerts umfasst.

19. Verfahren (400) nach Anspruch 18, das ferner das Unterscheiden zwischen einer durch Verschleiss bedingten Bandverlängerung und einer durch Belastung bedingten Bandverlängerung auf der Grundlage der beim ersten Detektor (12; 212; 350) berechneten Bandverlängerung und der bei einem zweiten Detektor (216) berechneten Bandverlängerung umfasst, wobei sich der zweite Detektor (216) an einer festen Stelle entlang des Wegs des Bands (90) und in Laufrichtung des Bands hinter einem Bandantrieb (95) befindet.

20. Verfahren (400) nach Anspruch 19, das ferner das Unterscheiden zwischen einer durch Materialbelastung bedingten Bandverlängerung und einer durch Reibung bedingten Bandverlängerung auf der Grundlage der beim zweiten Detektor (216) berechneten Bandverlängerung und der bei dem einen oder den mehreren zusätzlichen nachgelagerten Detektoren (218) berechneten Bandverlängerung umfasst, wobei der eine oder die mehreren zusätzlichen nachgelagerten Detektoren (218) sich an einer entsprechenden oder mehreren festen Stellen entlang des Wegs des Bands (90) und nachgelagert zum Bandantrieb (95) befinden.

## Revendications

1. Système (10 ; 200) permettant de mesurer une courroie transporteuse (90), comprenant :
un premier détecteur (12 ; 212 ; 350) configuré pour être fixé en un endroit le long d'un parcours de la courroie transporteuse (90) ;
un premier générateur de signal (20 ; 360) configuré pour être fixé en un premier endroit de la courroie transporteuse (90) de telle manière que le premier générateur de signal (20 ; 360) est détectable par le premier détecteur (12 ; 212 ; 350) lorsque le premier générateur de signal (20 ; 360) est à portée du premier détecteur (12 ; 212 ; 350) ;
dans lequel le premier détecteur (12 ; 212 ; 350) est configuré pour fournir un premier signal lorsque le premier générateur de signal (20 ; 360) approche du premier détecteur (12 ; 212 ; 350) ; et
un processeur (30 ; 230) en communication électronique avec le premier détecteur (12 ; 212),
**caractérisé en ce que** le premier détecteur (12 ; 212 ; 350) est configuré pour fournir un deuxième signal lorsque le premier générateur de signal (20 ; 360) s'éloigne du premier détecteur (12 ; 212 ; 350) et le processeur (30 ; 230) est configuré pour calculer une vitesse de courroie d'après un temps écoulé entre le premier signal et le deuxième signal et la distance entre une position du premier générateur de signal (20 ; 360) quand le premier signal est fourni et une position du premier générateur de signal (20 ; 360) quand le deuxième signal est fourni.

2. Système (10 ; 200) selon la revendication 1, dans lequel le processeur (30 ; 230) est configuré en outre pour calculer une longueur de courroie basée sur la vitesse de courroie calculée et sur le temps écoulé entre deux premiers signaux ou plus et/ou deux deuxièmes signaux ou plus.

3. Système (10 ; 200) selon la revendication 2, dans lequel le processeur (30 ; 230) est configuré en outre pour calculer un allongement de courroie basé sur la longueur de courroie calculée et sur une valeur de longueur de courroie mémorisée.

4. Système (10 ; 200) selon la revendication 3, comprenant en outre un deuxième détecteur (216) configuré pour être fixé en un endroit fixe le long d'un parcours de la courroie transporteuse (90) et pour être situé en aval d'un entraînement de courroie (95) dans la direction de déplacement de la courroie, dans lequel le processeur (30 ; 230) est configuré en outre pour faire la distinction entre l'allongement de courroie résultant de l'usure et l'allongement de courroie résultant de la charge en se basant sur l'allongement de courroie calculé au niveau du premier détecteur et l'allongement de courroie calculé au niveau du deuxième détecteur.

5. Système (10 ; 200) selon la revendication 4, comprenant en outre un ou plusieurs détecteurs aval supplémentaires (218) configurés pour être fixés en un ou plusieurs endroits fixes correspondants le long d'un parcours de la courroie transporteuse (90) en aval de l'entraînement de courroie (95) dans la direction de déplacement de la courroie, dans lequel le processeur (30 ; 230) est configuré en outre pour faire la distinction entre l'allongement de courroie résultant du chargement de matériaux sur la courroie (90) et l'allongement de courroie résultant du frottement en se basant sur l'allongement de courroie calculé au niveau du deuxième détecteur et l'allongement de courroie calculé au niveau desdits un ou plusieurs détecteurs aval supplémentaires.

6. Système (10 ; 200) selon l'une quelconque des revendications 1 à 5, dans lequel le premier générateur de signal (20 ; 360) est un aimant.

7. Système (10 ; 200) selon la revendication 6, dans lequel le premier détecteur (12 ; 212 ; 350) est un capteur à effet Hall.

8. Système (10 ; 200) selon la revendication 6 ou 7, comprenant en outre une pièce polaire (352) adjacente au premier détecteur (12 ; 212 ; 350) et configurée pour diriger un champ magnétique du premier générateur de signal (20 ; 360) vers le premier détecteur (12 ; 212 ; 350).

9. Système (10 ; 200) selon l'une quelconque des revendications 1 à 8, dans lequel le système comprend en outre un capteur de distance (14, 24 ; 354, 360) à proximité du premier détecteur (12 ; 212 ; 350) et configuré pour détecter une distance par rapport à la courroie transporteuse (90), et dans lequel le processeur (30 ; 230) est configuré en outre pour utiliser la distance par rapport à la courroie transporteuse (90) dans le calcul de la vitesse de courroie.

10. Système (10 ; 200) selon la revendication 9, dans lequel le capteur de distance est un capteur ultrasonore.

11. Système (10 ; 200) selon la revendication 9, dans lequel le capteur de distance comprend un capteur magnétique (14 ; 354) et un aimant (24 ; 360), l'aimant (24 ; 360) étant configuré pour être fixé sur la courroie transporteuse (90) en un endroit proche du premier générateur de signal (20 ; 360), et dans lequel le capteur magnétique (14 ; 354) est configuré pour fournir le signal de distance lorsque l'aimant (24 ; 360) passe devant le capteur magnétique (14 ; 354).

12. Système (10 ; 200) selon l'une quelconque des revendications 1 à 11, comprenant en outre un deuxième générateur de signal (22), dans lequel le premier détecteur (12 ; 212 ; 350) est configuré pour fournir un troisième signal lorsque le deuxième générateur de signal (22) se rapproche du premier détecteur (12 ; 212 ; 350) et un quatrième signal lorsque le deuxième générateur de signal (22) s'éloigne du premier détecteur (12 ; 212 ; 350).

13. Système (10 ; 200) selon la revendication 12, dans lequel le processeur (30 ; 230) est configuré en outre pour calculer une vitesse de courroie basée sur un temps écoulé entre le troisième signal et le quatrième signal.

14. Système (10 ; 200) selon la revendication 12 ou 13, dans lequel le processeur (30 ; 230) est configuré en outre pour calculer une longueur de segment de courroie entre le premier générateur de signal (20 ; 360) et le deuxième générateur de signal (22) basée sur au moins l'un des premier et deuxième signaux, et au moins l'un des troisième et quatrième signaux.

15. Système (10 ; 200) selon la revendication 14, dans lequel le processeur (30 ; 230) est configuré en outre pour calculer un allongement de courroie basé sur la longueur de segment de courroie et sur une valeur de longueur de segment de courroie mémorisée.

16. Procédé (400) pour mesurer une courroie transporteuse (90), comprenant l'étape suivante :
recevoir, dans un processeur (30 ; 230), un premier signal généré quand un premier générateur de signal (20 ; 360) fixé sur la courroie transporteuse (90) arrive à portée d'un premier détecteur (12 ; 212 ; 350) en un endroit fixe le long d'un parcours de la courroie (90) ;
**caractérisé en ce qu'**il comprend en outre les étapes suivantes :
recevoir, dans le processeur (30 ; 230), un deuxième signal généré quand le premier générateur de signal (20 ; 360) sort de la portée du premier détecteur (12 ; 212 ; 350) ; et
calculer, en utilisant le processeur (30 ; 230), une vitesse de courroie d'après un temps écoulé entre le premier signal et le deuxième signal et la distance entre une position du premier générateur de signal (20 ; 360) quand le premier signal est fourni et une position du premier générateur de signal (20 ; 360) quand le deuxième signal est fourni.

17. Procédé (400) selon la revendication 16, comprenant en outre le fait de calculer une longueur de courroie basée sur la vitesse de courroie calculée et sur le temps écoulé entre deux premiers signaux ou plus et/ou deux deuxièmes signaux ou plus.

18. Procédé (400) selon la revendication 17, comprenant en outre le fait de calculer un allongement de courroie basé sur la longueur de courroie calculée et sur une valeur de longueur de courroie mémorisée.

19. Procédé (400) selon la revendication 18, comprenant en outre le fait de faire la distinction entre un allongement de courroie résultant de l'usure et un allongement de courroie résultant de la charge en se basant sur l'allongement de courroie calculé au niveau du premier détecteur (12 ; 212 ; 350) et l'allongement de courroie calculé au niveau d'un deuxième détecteur (216), le deuxième détecteur (216) étant situé en un endroit fixe le long du parcours de la courroie (90) et en aval d'un entraînement de courroie (95) dans une direction de déplacement de la courroie.

20. Procédé (400) selon la revendication 19, comprenant en outre le fait de faire la distinction entre un allongement de courroie résultant du chargement de matériaux et l'allongement de courroie résultant du frottement en se basant sur l'allongement de courroie calculé au niveau du deuxième détecteur (216) et l'allongement de courroie calculé au niveau desdits un ou plusieurs détecteurs aval supplémentaires (218), lesdits un ou plusieurs détecteurs aval supplémentaires (218) étant situés en un ou plusieurs endroits fixes correspondants le long du parcours de la courroie (90) et en aval de l'entraînement de courroie (95).
